(19) Europäisches Patentamt European Patent Office Office européen des brevets

(11) **EP 4 075 317 A1**

(12) **EUROPEAN PATENT APPLICATION**

(43) Date of publication:
**19.10.2022 Bulletin 2022/42**

(21) Application number: **21169022.7**

(22) Date of filing: **16.04.2021**

(51) International Patent Classification (IPC):
**G06F 30/18** (2020.01)     **G06F 111/10** (2020.01)
**G06F 113/16** (2020.01)

(52) Cooperative Patent Classification (CPC):
**G06F 30/18;** G06F 2111/10; G06F 2113/16

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Zeplug**
**75002 Paris (FR)**

(72) Inventor: **DUPIN, Romain**
**92300 LEVALLOIS-PERRET (FR)**

(74) Representative: **Argyma**
**14 Boulevard de Strasbourg**
**31000 Toulouse (FR)**

(54) **METHOD FOR GENERATING AND EVALUATING 3D DESIGNS OF ELECTRICAL SYSTEMS FOR ELECTRICAL VEHICLES CHARGING WITHIN A BUILDING**

(57)     The invention concerns a method for generating a 3D design (17) of an electrical system to be deployed in a portion of a building, the 3D design (17) comprising a set of source positions, a set of charging positions, and cable paths. The method comprises: identifying (E1) a set of architectural elements (12) from a spatial representation (11) of the portion of the building; a step of voxelization (E2) of the set of architectural elements (12); generating (E4) a weighted graph (15) comprising all possible cable paths; solving (E5) shortest path problems to compute a set of potential cable paths (16) between respectively each one of the set of charging positions and each one of the set of source positions using the weighted graph (15); selecting (E6) the cable paths among the set of potential cable paths (16).

FIG. 1

EP 4 075 317 A1

**Description**

**FIELD OF THE INVENTION**

The present invention concerns the domain of electrical system designs, notably for electrical vehicle (EV) load charging within buildings, especially within indoor parking lots for both households and enterprises.

The present invention relates, in particular, to a method for generating and evaluating 3D designs of electrical systems within a building.

**BACKGROUND OF THE INVENTION**

The design of an electrical system in a building is generally based on a simple radial structure, with one delivery point supplying a plurality of charging stations through cables.

In order to reduce the cost of these electrical systems, several modifications could be made, such as the introduction of batteries, electrical cabinets, renewable generation units and power electronic devices.

Studying the impact of these modifications could be handmade in a single-house, but is generally impossible in a large building, where the potential benefits are far greater. As an example, for an electrical system with EV charging stations in a condominium parking, it would require to simultaneously consider all the following parameters: the cable lengths (approximately 12km for a parking lot comprising 200 parking lots), the cable sizing based on power flow calculations, the potential combination of additional equipment and the future evolution of the infrastructure based on forecasts.

In light of this background, there is a need for a tool to automatically design in 3D and evaluate electrical systems.

**SUMMARY OF THE INVENTION**

In accordance with the present invention a method is provided for generating 3D designs of electrical systems to be deployed in a portion of a building, especially of a parking lot adapted to the charging of EVs, and for evaluating the 3D designs, notably from a cost minimization perspective. By searching for optimal cable paths, preferably based on a 3D scan, the resulting 3D design of the electrical system is close to what could be installed in reality. As a result, an accurate estimation of the electrical system characteristics can be made and used as a tool for evaluating and selecting a 3D design of the electrical system.

The electrical system comprises at least one source point, a plurality of charging stations, and cables. The 3D design of the electrical system comprises accordingly a set of source positions corresponding to the position of each of the at least one source point, a set of charging positions corresponding to the positions of the plurality of charging stations, and cable paths of the cables.

The method according to the invention comprises:

- identifying a set of architectural elements from a spatial representation of the portion of the building;

- a step of voxelization of the set of architectural elements, the voxelization comprising generating a 3D voxel database, each voxel of the 3D voxel database defined such that at least one of the set of architectural elements passes through said voxel, said voxel having three-dimensional coordinates and additional data, the additional data comprising information on the least one of the set of architectural elements passing through said voxel;

- generating a weighted graph comprising a set of edges being all possible cable paths, each of the set of edges being configured to connect voxels of the 3D voxel database and having a weight computed as a function of the additional data of said voxels, the weighted graph is advantageously used to favor or on the contrary disadvantage a cable path and can easily be controlled by a project manager;

- solving shortest path problems to compute a set of potential cable paths between respectively each one of the set of charging positions and each one of the set of source positions using the weighted graph;

- selecting the cable paths among the set of potential cable paths such that each of the set of charging positions is connected to only one of the source positions.

According to a first embodiment of the invention, the method comprises performing a 3D scan acquisition of the portion of the building where the electrical system is to be deployed, in order to generate the spatial representation comprising a point cloud data, the point cloud data being a set of points with 3D-coordinates. The use of data provided by a 3D scanner allows advantageously to design in 3D the electrical system with the method according to the invention in every building where measurements could be made which enhances a generic character of the method.

Advantageously, the point cloud data having outlier points, the method according to the first embodiment of the invention further comprises a pre-treatment of the point cloud data to delete the outlier points.

Advantageously, said set of architectural elements having planar surfaces, the identifying the set of architectural elements comprises running a segmentation process notably to identify geometrical elements (planar surfaces, cylinders) and then associate the identified geometrical elements to pre-determined architectural elements, in particular roofs, walls, or grounds.

Advantageously, the generating the 3D voxel database comprises reconstructing missing voxels. Reconstructing the missing voxels allows advantageously to increase a number of possible cable paths for instance by reconstructing hidden walls. The reconstruction results from a balance between having enough voxels to be able to compute optimal cable paths and avoiding creating aberrant voxels that lead to unfeasible cable paths.

Advantageously, several steps of solving shortest path problems are performed respectively for each of a plurality of sets of source positions, in order to generate a plurality of 3D designs of electrical systems, each corresponding to a set of source positions.

Advantageously, the selecting the cable paths comprises determining cable characteristics of each of the set of potential cable paths and selecting the potential cable paths minimizing cost, the cable characteristics comprising cable lengths and cable sections, the cable sections being computed based on physical constraints. The method presents the advantage of being able to compute accurately the cable sections which impacts favorably cost estimations since the cable sections are of substantial influence on the total cost of the electrical system.

Advantageously, the computing the cable sections comprises solving power flow equations such that the cable sections comply with a voltage drop value between a source point and a charging station.

According to an embodiment of the invention, the method further comprises forecasting an evolution of the electrical system, in particular a number and power requirements of the plurality of charging stations, the forecasting the evolution of the electrical system comprising generating a set of scenarios, having each an associated probability, by using a probability a parking spot will be equipped with a charging station with a given power at a given time.

## BRIEF DESCRIPTION OF THE DRAWINGS

The invention will be better understood on reading the description that follows, and by referring to the appended drawings given as non-limiting examples, in which identical references are given to similar objects and in which:

Figure 1 illustrates a schematic diagram of a method for generating and evaluating 3D designs of an electrical system to be deployed in a portion of a building according to the invention;

Figure 2 illustrates schematically architectural elements identified from a spatial representation for an example of an underground parking;

Figure 3 illustrates a partial view of a point cloud data (left) and a representation of the corresponding voxels (right) using Minecraft, each voxel being associated to a cube with a side length of 15 cm, and 500000 voxels being drawn for the example of the underground parking, the colors of the voxels depending on whether the voxels belong to a horizontal surface, a vertical surface or both;

Figure 4 illustrates an example of a 3D design of an electrical system generated according to the method of the invention for the example of the underground parking;

Figure 5 illustrates potential cable paths generated according to the method of the invention for the example of the underground parking;

Figure 6 illustrates a first 3D design of an electrical system generated according to the method of the invention with an initial voltage drop set equal to 2.5% of the nominal voltage for the example of the underground parking;

Figure 7 illustrates a second 3D design of an electrical system generated according to the method of the invention with an initial voltage drop set equal to 1.5% of the nominal voltage for the example of the underground parking.

## DETAILED DESCRIPTION

The invention concerns a method for generating and evaluating a three-dimensional (3D) design of an electrical system configured to be deployed in a portion of a building. The invention is described hereafter in the context of the 3D design of the electrical system for electrical vehicles' (EVs) charging within the portion of a building, especially an indoor parking lot. In particular, an example of underground parking is used all along the description for illustration purpose. Although, this application is not limitative of the invention which may be applied to the 3D design of any electrical system for a building.

Hereafter is provided a general description of the invention.

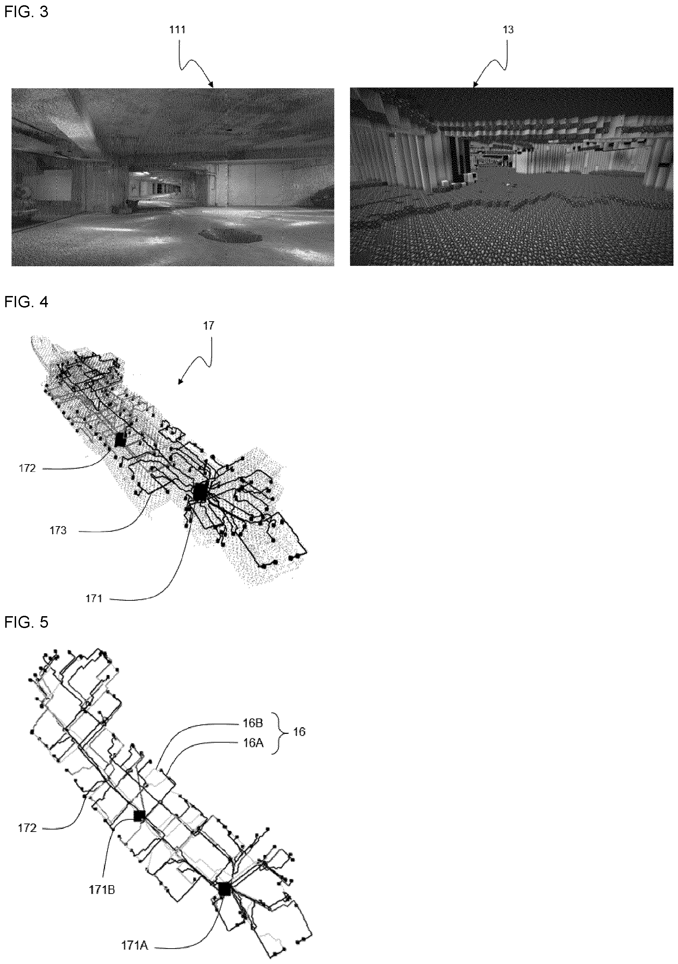

Figures 4, 6 and 7 illustrate schematically possible 3D designs of electrical systems for the example of the underground parking. The electrical system comprises at least one source point, a plurality of charging stations, and cables connecting each of the plurality of charging stations to one of the at least one source point. The at least one source point comprises at least one delivery point, and potential additional electrical cabinets. The delivery point, in particular, corresponds to the point where the electrical system is fed by an external electrical network, whereas the electrical cabinets can be seen as local electrical "relays" which all are connected to the delivery point.

In reference to Figures 4, 6, and 7, the 3D design 17 of the electrical system comprises a set of source positions 171 corresponding to the position of each of the at least one source point, a set of charging positions 172 corresponding to the positions of the plurality of charging stations, and cable paths 173 of the cables.

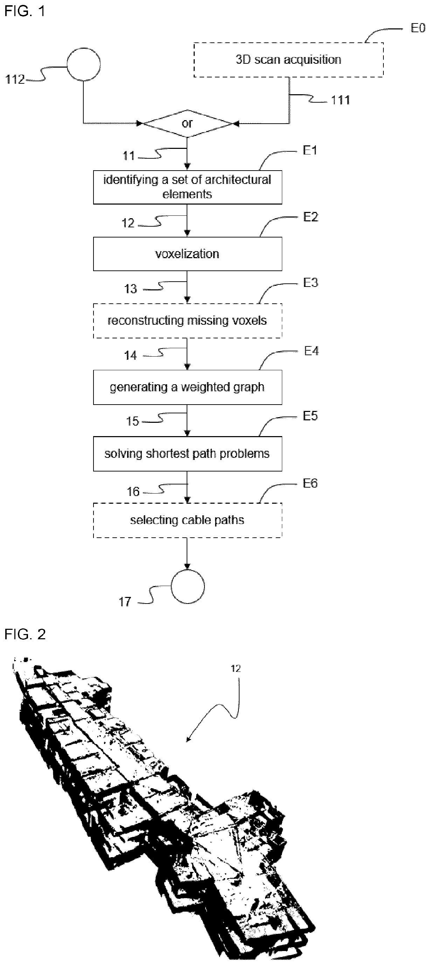

As illustrated in Figure 1, the method according to the invention comprises:

identifying E1 a set of architectural elements 12 from a spatial representation 11 of the portion of the building;

a step of voxelization E2 of the set of architectural elements 12, the voxelization E2 comprising generating a 3D voxel database 13, each voxel of the 3D voxel database 13 being defined such that at least one of the set of architectural elements 12 passes through said voxel, said voxel having three-dimensional coordinates and additional data, the additional data comprising information on the least one of the set of architectural elements 12 passing through said voxel;

advantageously reconstructing E3 missing voxels 14, and adding them to the 3D voxel database 13;

generating E4 a weighted graph 15 comprising a set of edges being all possible cable paths, each of the set of edges being configured to connect voxels of the 3D voxel database 13 and having a weight computed as a function of the additional data of said voxels;

solving E5 shortest path problems to compute a set of potential cable paths 16 between respectively each one of the set of charging positions 172 and each one of the set of source positions 171 using the weighted graph 15;

selecting E6 the cable paths 173 among the set of potential cable paths 16 such that each of the set of charging positions 172 is connected to only one of the source positions 171, notably by computing characteristics of the set of potential cable paths 16, depending on power flow equations. Hence, for situations where there are several source positions, this allows advantageously selecting to which source position each charging point should be connected to, according to physical constraints and economical objectives.

Hereafter, the spatial representation used in the scope of the invention is detailed.

In reference to Figure 1, in a preferred manner, the method according to the invention comprises the generation of the spatial representation 11 by performing a 3D scan acquisition E0 of the portion of the building where the electrical system is to be deployed. Then, the spatial representation 11 comprises a point cloud data 111, the point cloud data 111 being a set of points with 3D-coordinates. In a general manner, the number of points in the point cloud data is the result of a compromise between the wanted level of precision of the spatial representation 11 and the duration of the 3D scan acquisition E0. In an illustrative example, the point cloud data, used for the example of the underground parking illustrated through Figures 2 to 7, presents approximatively 400 million points.

The point cloud data 111 may comprise outlier points. It could be advantageous to perform a pre-treatment to delete those points with outlier detection techniques.

As an alternative to the point cloud data from a 3D-scan acquisition E0, the spatial representation 11 may also be a 3D model 112 of the portion of the building, as represented in Figure 1. For instance, a Building Information Model (BIM) could be used. Although, the use of data provided by a 3D scanner is more generic as it is feasible in every case where measurements could be made, whereas a BIM could be available only for a small proportion of the buildings.

Throughout the rest of the description, the invention will be described in the frame of the spatial representation generated by a 3D scanner, meaning the point cloud data.

Identifying the set of architectural elements from the spatial representation is detailed hereunder.

As illustrated in the example of Figure 2, the set of architectural elements 12 comprises in particular roofs, walls, and grounds which are planar surfaces, and other simple elements such as pipes or cable trays. Identifying the set of architectural elements 12 comprises notably identifying geometrical elements (planar surfaces, cylinders) by running several segmentation processes, and then associating the identified geometrical elements to pre-determined architectural elements.

As a first step, the planar surfaces are advantageously identified. In order to do so, the used segmentation process is preferably a region growing algorithm. The point cloud data serves as an initial poll of points to be explored. The principle of the region growing algorithm, which requires several iterations, consists in, at each iteration, selecting randomly a point from a current poll of points as a seed, identify if the point already belongs to a planar surface, and if so, identify geometrical characteristics of the corresponding planar surface.

Then, only the planar surfaces complying with a pre-defined minimum surface criterion are kept. This condition allows advantageously to ignore too small surfaces, corresponding for instance to cars, signs, or cable trays. The points belonging to "big enough" planar surfaces (respecting the pre-defined minimum surface criterion) are removed from the current poll of points.

In a preferred manner, the algorithm can be stopped when either a given number of iterations is achieved or when a given ratio of the initial poll of points has been removed. An indicative minimum ratio of removed points from the initial poll of points is 95%, for underground parking. Although, the choices of algorithm parameters remain at the appreciation of the user and depend on the specificities of the considered point cloud data. For instance, in presence of irregular shapes such as people, cars, or trees, the minimum ratio of removed points could be increased or decreased.

When the algorithm is stopped, the geometrical characteristics of the planar surfaces, notably the planar surfaces' contours and normal vectors are advantageously recorded.

Advantageously, the nature of the planar surfaces may also be identified, in order to associate the identified geometrical elements to architectural elements. As an example, a ground can be defined as a planar surface presenting a high quantity of points, with respect to other planar surfaces, which does not have a similar plane above it and which is not the highest planar surface, i.e. the highest roof.

As a second step, simple geometric elements may be identified using the remaining points of the poll of points, after the planar surfaces' identification, designated as remaining poll of points. The simple geometric elements may comprise pipes and cable trays which are metallic structures configured to support the cables.

More specifically, the cables should not be located on pipes, whereas they are preferably set up on cable trays to reduce cost and to increase the acceptance of people, such as inhabitants of condominiums. Different types of cable tray exist, the most common ones for indoor parking lots are wire mesh and channel cable trays, which both present identifiable geometrical characteristics. It could be advantageous to identify both types of cable trays. Moreover, cable heating could occur if several cables are set together in a same cable tray, especially if the cables are close to one another. To counter this issue, a large enough section of the cable tray should correspond to the quantity of cables. Hence, it would be advantageous to additionally identify the sections of the cable trays.

The use of adequate algorithms allows, advantageously, to identify the simple geometric elements and their characteristics. In a similar manner as the first step of identification of the planar surfaces, throughout the iterations, the current poll of points decreases at each identification. Then, same stop conditions as for the first step may be used, meaning either a given number of iterations is achieved or a given ratio between the current poll of points and the poll of points at the beginning of the algorithm have been removed.

Identifying the pipes may comprise extracting cylinders with a high enough radius using for instance RANSAC, or Hough transform methods.

Identifying the cable trays preferably comprises, at each iteration, selecting randomly a point from the current poll of points, selecting surrounding points within a given volume centered on the selected point, detecting if the surrounding points belong to a section of the cable tray, if so, selecting a following point along an identified direction of the cable tray.

Advantageously, the algorithms for identifying the simple geometric elements, may be run for a sub-group of the remaining poll of points, for instance at the vicinity of roofs and walls previously identified. Hence, processing points belonging for instance to a car or people, is avoided, thus saving computational time. Otherwise, other techniques are possible to avoid having to process points not belonging to the infrastructure. For instance, machine learning techniques could be used to filter points belonging to cars and people, preferably prior to identifying the set of architectural elements.

Hereafter is developed in more details the step of voxelization E2, where the 3D voxel database 13 can be seen as a new and simpler representation of the portion of the building.

As stated previously, each voxel of the 3D voxel database has 3D coordinates and additional data. Each voxel may advantageously be a cube centered on the corresponding 3D coordinates and presenting a side length designated as $\delta$. The side length $\delta$ is coherent with sizes of the set of architectural elements and has preferably the same value for all voxels, even though it is not mandatory. For instance, Figure 3 represents, for the example of the underground parking, on the left the point cloud data 111 and on the right the 3D voxel database 13, where the colors of the voxels depend on whether the voxels belong to a horizontal surface, a vertical surface or both. In this example of the underground parking, the side length is equal to 15 cm, and 500000 voxels have been constructed.

For each one of the set of architectural elements, all the voxels it passes though are identified, and if one of the voxels is not in the 3D voxel database, it is added in it. Then, data related to the architectural element is attached to either the added or the existing voxel. Hence, the additional data of each voxel should comprise an identification and characteristics of all the architectural elements passing through said voxel. Hereafter is detailed a non-exhaustive list of possible characteristics depending on the concerned architectural element: nature (ground, wall, roof) and normal vector for the planar surfaces, cylinder radius for the pipes, nature (type of cable tray) and section for the cable trays. Those additional data are useful to further arbitrate on the preferable cable paths during the step of solving shortest path problems. As an example, passing vertically a cable through a voxel corresponding to a part of a ground would imply piercing the ground, which is costly and undesirable.

In a general manner, the 3D voxel database may comprise gaps which are hereafter designated as the missing voxels. As an example, in a context of an in-service parking lot, parked cars may hide the walls behind them. Consequently, the hidden parts of the wall could not be identified during the identification of the set of architectural elements, hence there are missing voxels at the hidden parts' location. As another example, the quantity of points from the 3D scan acquisition could be too low to identify the simple geometric elements such as the pipes or the cable trays. The missing voxels could lead to situation where the computation of the cable paths would provide longer cable paths than what could be attained, or even could not be able to produce a solution if the missing voxels are too many.

In reference to Figure 1, a reconstruction E3 of the missing voxels 14 may be worthwhile. During the reconstruction, voxels are created, such voxels also comprise additional data relative to the set of elements they are supposed to be attached to. The reconstruction may be either manual or automatic. In the case of automatic reconstruction, different reconstruction rules are applicable based on usual building characteristics and on reconstruction algorithms, such as for instance pipe reconstruction algorithms.

Nevertheless, the reconstruction of the missing voxels can lead to aberrant voxels, and thus to possible unfeasible cable paths. For instance, reconstructed voxels may connect a wall to part of a car which has been mistakenly recorded as a planar surface. Hence, the level of reconstruction of the missing voxels results from a balance between having enough voxels to be able to compute optimal cable paths and avoiding creating aberrant voxels that lead to unfeasible cable paths.

On one hand, the reconstruction of the missing voxels depends on the quantity of points acquired per m3 during the 3D scan acquisition. In fact, a larger quantity of points acquired per m3 lead to a more realistic identification of the set of architectural elements, and thus to a 3D voxel database with less missing voxels to reconstruct. But, a larger quantity of points acquired per m3 takes more time of a human operator for performing the 3D scan acquisition, which can be costly. Consequently, the chosen quantity of points acquired per m3 may be a trade-off between the 3D scan acquisition duration, and the possible reconstruction of the missing voxels. It can be noted that the chosen quantity of points acquired per m3 does not have to be constant for the whole portion of the building. If a scanned area has a simple geometry with few pipes and cable trays, the chosen quantity of points acquired per m3 may be set lower than if the scanned area would have been more intricate.

On the other hand, performing potential additional treatments on the point cloud data, such as filtering points belonging to cars or people by machine learning techniques, can further reduce the reconstruction of the missing voxels which can be a tedious operation.

Generating the weighted graph is detailed hereunder.

The set of edges can be seen as all the possible cable parts of the electrical system. An edge of the set of edges may be defined as an element connecting two adjacent voxels and/or as an element connecting more than two voxels pertaining to a contour of a same horizontal planar surface. The principle of the construction of the weighted graph 15 is to assign a weight to each edge. The weight can be further used to favor or on the contrary disadvantage a cable path during the step of solving the shortest path problems.

In an advantageous manner, the computation of the weight, designated as $W_{A,B}$, of an edge connecting two adjacent voxels, respectively designated A and B, is performed using the following formula:

$$W_{A,B} = L_{A,B} \cdot K_{A,B}$$

where $L_{A,B}$ is a distance between the centers of the two voxels A and B, and $K_{A,B}$ is a pre-determined parameter depending on the additional data of the two voxels. The use of the parameter $K_{A,B}$ advantageously enforces rules that allow to introduce a hierarchy between the possible cable paths. It could be pre-set by a project manager in order to ensure that the 3D designs of electrical systems are close to what would have been drawn by a human operator. For instance, the following guidelines for $K_{A,B}$ could be enforced, the smaller is $K_{A,B}$, the more suitable is the corresponding edge for a cable path:

- $K_{A,B}$ is equal to 1 if the voxels both belong to a same planar surface;

- $K_{A,B}$ is slightly inferior to 1 if the voxels both belong to two orthogonal planar surfaces in order to favor cable paths at wall corners;

- $K_{A,B}$ is set equal to a value substantially superior to 1 if it the edge passes through a ground unequipped with a go-through hole;

- $K_{A,B}$ is set equal to a value substantially inferior to 1 if the voxels are part of a same cable tray.

Hence, cable paths minimizing the edges' weight are favored.

The weighted graph is further used as an input for solving E5 shortest path problems to compute the set of potential cable paths 16 which is detailed hereunder and illustrated in Figure 5 for the example of parking.

As stated beforehand, several shortest path problems are solved to determine the potential cable paths 16 between respectively each of the set of charging positions 172 and each of the set of source positions 171 using the weighted graph. Hence, the set of charging positions 172 and the set of source positions 171 are interconnected by the potential cable paths 16. In particular, in reference to Figure 5, the set of potential cable paths 16 can be divided into a first 16A (in black) and a second 16B (in gray) sets of potential cable paths linking the charging positions to respectively a first 171A and a second 171B source positions. Then, selecting the cable paths 173 is performed among the set of potential cable paths 16. It can be noted that, in such a configuration, the cable paths 173 may comprise parts from both the first 16A and the second 16B sets of potential cable paths.

Additionally, other sets of positions may be taken into account. For instance, defining a set of positions of potential features such as holes allow to better monitor the passage of cables through walls and grounds.

The set of source positions, the set of charging positions, and the other sets of positions may be defined either manually or automatically. As an example, algorithms of automatic detection of parking spots exist and can advantageously allow determining the set of potential charging positions.

Solving a shortest path problem between the points of the set of source positions, the set of charging positions, and the other sets of positions, could be performed using for instance Dijkstra's algorithm, ant colony optimization, particle swarm optimization, genetic algorithm, fruit fly optimization, A* algorithm, or simulated annealing. For the examples shown on Figures 4 to 7, Dijkstra's algorithm is used.

Moreover, a plurality of sets of source positions could be tested. Then, several steps of solving E5 shortest path problems could be performed in order to generate a plurality of 3D designs of electrical systems, each corresponding to a different set of source positions.

Advantageously, selecting E6 the cables paths 173 comprises determining cable characteristics of each of the set of potential cable paths and selecting the potential cable paths minimizing costs. In particular, the cable characteristics comprises cable lengths and cable sections, the cable sections being computed based on physical constraints. Hence, when a charging point could be connected to several source points, this step allows selecting a preferred source point accordingly to physical constraints and cost minimization objectives. The cable sections are of substantial influence on the total cost of the electrical system. The cable sections must comply with several constraints, two constraints are detailed hereafter.

Firstly, the cable sections must be large enough to ensure that cable temperature during charge does not rise up to a threshold temperature where the cable is deteriorated. To ensure this first condition, several parameters are accounted for, among others the current passing through the cable, the number of harmonics in the current, the environment of the cable, and the number of cables set side by side and above one another.

Secondly, voltage drop $\Delta V_{k,i}$ between a source point k and a charging station i should remain within a given interval $[\Delta V_{min,i}, \Delta V_{max,i}]$ depending especially on electric standards. Several methods may in practice permit to compute the voltage drop $\Delta V_{k,i}$.

A first approach for computing the voltage drop $\Delta V_{k,i}$ would be to consider only active loads and radial grid infrastructure. Then, Ohm's law allows computing the voltage drop $\Delta V_{k,i}$ as following $\Delta V_{k,i} = b \cdot R_{k,i} \cdot I_{k,i}$, where b is equal to 2 if the charging load is single-phased and to 1 if the charging load is three-phased, $R_{k,i}$ is the cable resistance between the source point k and the charging station i, and $I_{k,i}$ is the current called by the charging station i. If the source point k is a delivery point, the preceding formula is sufficient in itself. Whilst, if the source point k is an electrical cabinet, an additional voltage drop between the source point k and the delivery point is added to the computation of the voltage drop $\Delta V_{k,i}$.

Alternatively, a second approach for computing the voltage drop $\Delta V_{k,i}$ in a context of a three-phase balanced system, relies on the use of alternating current (AC) power flow equations (presented hereunder) while considering both active and reactive power.

$$0 = -P_i + \sum_{k=1}^{N} |V_i| \cdot |V_k| \cdot (G_{ik} \cdot \cos(\theta_{ik}) + B_{ik} \cdot \sin(\theta_{ik}))$$

$$0 = -Q_i + \sum_{k=1}^{N} |V_i| \cdot |V_k| \cdot (G_{ik} \cdot \sin(\theta_{ik}) - B_{ik} \cdot \cos(\theta_{ik}))$$

$$|I_{ik}| = |U_{ik}| \cdot |Y_{ik}|$$

where $P_i$ and $Q_i$ are respectively active and reactive powers injected at the charging station i, $V_i$ and $V_k$ are the voltage amplitude at respectively the charging station i and the source point k, $G_{ik}$ and $B_{ik}$ are respectively the real and the imaginary parts of the admittance matrix associated to the connection between the charging station i and the source point k, $\theta_{ik}$ is the difference in voltage angles between the charging station i and the source point k, $I_{ik}$, $U_{ik}$, and $Y_{ik}$ are respectively the current, the voltage, and the admittance between the charging station i and the source point k.

A third approach for computing the voltage drop $\Delta V_{k,i}$ in a configuration of a three-phase unbalanced system, is to use Fortescues's transformation that can provide three symmetric systems compatible with the use of the previously presented AC power flow equations. This configuration occurs for example when several EVs are charging in single phase.

In a nutshell, for a given value of the voltage drop $\Delta V_{k,i}$, the cable sections of the potential cable paths can be computed. Then, the cable sections are further used for selecting one of the potential cable paths for each of the set of charging points, among the different potential cable paths linked to the different source points, so that each charging point is connected to one source point. This approach is traditional even if grid meshing could be considered, with charging points being connected to more than one source point. The cable path selection could be made according to a cost minimization criterion, a large section implying a higher cost and a longer time for the installation, although other criteria could be used.

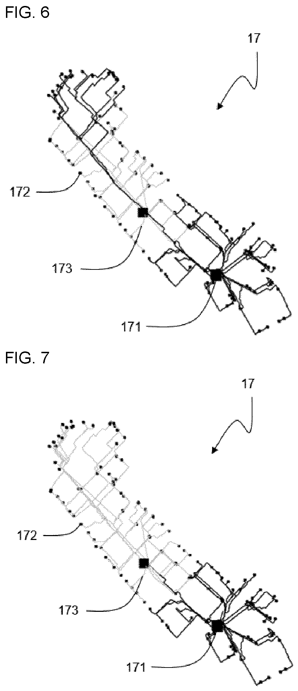

As an illustrative example, Figures 6 and 7 show a first and a second 3D designs of electrical systems with the same sets of charging points and of source points. The only difference is the initial voltage drop of the infrastructure, equal to 2.5% of the nominal voltage for the first 3D design and 1.5% of the nominal voltage for the second 3D design. This change of voltage drop could be made through different modifications, such as connecting the electrical cabinet to the grid with a high section cable or adding power electronic devices increasing the voltage. In the illustrated example, without these additional investments, several charging points close to a second electrical cabinet must be connected to the first one, which is 30m farer, because of the impossibility to connect charging points with cables having a section superior to a maximal section of 16mm$^2$ while respecting the maximal authorized total voltage drop. Evaluating the benefits associated to the different grid modifications is a complex problem, but the proposed invention allows computing the different cable costs, which are here decreased from 775€ per charging point for the first 3D design to 457€ with the proposed modifications for the second 3D design. These results allow arbitrating on if the grid modifications should be cost-effective or not.

It is thus possible to estimate the cost of several configurations of electrical systems based on the associated 3D designs.

Moreover, in a mutualized EV charging infrastructure, there is an uncertainty on which parking spots will be equipped with charging stations, and which power level is required. Therefore, the method according to the invention could advantageously comprise forecasting an evolution of the electrical system, in particular numbers and power requirements of the charging stations in the portion of the building. Forecasting the evolution of the electrical system preferably consists in generating a set of scenarios, having each an associated probability, with for instance Monte Carlo simulations and by using a probability a parking spot will be equipped with a charging station with a given power at a given time. Each of the set of scenarios, based on a same initially deployed electrical system at time 0, presents advantageously a configuration of the charging stations at a time t. Furthermore, the associated probability of each of the set of scenarios may be computed using machine learning methods.

The probability a parking spot will be equipped with a charging station with a given power at a given time may be computed with machine learning methods using for example local socio-economic characteristics and/or data of existing parking lots equipped with charging stations.

The set of scenarios can be further used for cost estimations over time, and thus as a decision-making tool by analyzing costs at different time horizons, for instance at short, middle, and long terms.

Although embodiments have been described with reference to a number of illustrative embodiments thereof, it should be understood that numerous other modifications and embodiments can be devised by those skilled in the art that will fall within the spirit and scope of the principles of this disclosure.

To sum up, the present invention provides a tool to generate 3D designs of an electrical system adapted to the charging of EVs in an indoor parking lot. By searching for optimal cable paths based on a 3D scan, the resulting 3D design of the electrical system is close to what could be installed in reality. Thanks to the use of 3D spatial representations, the estimation of the cable lengths is more accurate, for instance compared to a solution based on 2D plans (2D plans do not represent elements which impact cable paths, such as cable trays, beams, or floor thicknesses required to assess the possibility to drill holes). As a result, the cable sections which depend on the cable lengths are also better monitored.

Furthermore, the ability to forecast the evolution of the level of use of the electrical system for several possibilities of 3D designs of electrical systems is a substantial gain of the present invention. It provides a useful tool for cost estimations and to arbitrate on the possible installation of additional electrical equipment.

**Claims**

1. A method for generating a 3D design (17) of an electrical system to be deployed in a portion of a building, especially of a parking lot, the electrical system comprising at least one source point, a plurality of charging stations, and cables, the 3D design (17) of the electrical system comprising a set of source positions (171) corresponding to the position of each of the at least one source point, a set of charging positions (172) corresponding to the positions of the plurality of charging stations, and cable paths (173) of the cables, **characterized in that** the method comprises:

   - identifying (E1) a set of architectural elements (12) from a spatial representation (11) of the portion of the building;
   - a step of voxelization (E2) of the set of architectural elements (12), the voxelization (E2) comprising generating a 3D voxel database (13), each voxel of the 3D voxel database (13) defined such that at least one of the set of architectural elements (12) passes through said voxel, said voxel having three-dimensional coordinates and additional data, the additional data comprising information on the least one of the set of architectural elements (12) passing through said voxel;
   - generating (E4) a weighted graph (15) comprising a set of edges being all possible cable paths, each of the set of edges being configured to connect voxels of the 3D voxel database (13) and having a weight computed as a function of the additional data of said voxels;
   - solving (E5) shortest path problems to compute a set of potential cable paths (16) between respectively each one of the set of charging positions (172) and each one of the set of source positions (171) using the weighted graph (15);
   - selecting (E6) the cable paths (173) among the set of potential cable paths (16) such that each of the set of charging positions (172) is connected to only one of the source positions (171).

2. The method as claimed in claim 1, wherein it comprises performing a 3D scan acquisition (E0) of the portion of the building where the electrical system is to be deployed, in order to generate the spatial representation (11) comprising a point cloud data (111), the point cloud data (111) being a set of points with 3D-coordinates.

3. The method as claimed in the previous claim, the point cloud data (111) having outlier points, further comprising a pre-treatment of the point cloud data (111) to delete the outlier points.

4. The method as claimed in any of the claims 2 or 3, said set of architectural elements (12) having planar surfaces, wherein the identifying (E1) the set of architectural elements (12) comprises running a segmentation process.

5. The method as claimed in any of the previous claims, wherein the step of voxelization (E2) to generate the 3D voxel database (13) comprises reconstructing (E3) missing voxels (14).

6. The method as claimed in any of the previous claims, wherein several steps of solving (E5) shortest path problems are performed respectively for each of a plurality of sets of source positions, in order to generate a plurality of 3D designs (17) of electrical systems, each corresponding to a set of source positions (171).

7. The method as claimed in any of the previous claims, wherein selecting (E6) the cable paths (173) comprises determining cable characteristics of each of the set of potential cable paths (16) and selecting the potential cable paths minimizing cost, the cable characteristics comprising cable lengths and cable sections, the cable sections being computed based on physical constraints.

8. The method as claimed in the previous claims, wherein computing the cable sections comprises solving power flow

EP 4 075 317 A1

equations such that the cable sections comply with a voltage drop value between a source point and a charging station.

9. The method as claimed in any of the previous claims, further comprising forecasting an evolution of the electrical system, in particular a number and power requirements of the plurality of charging stations, the forecasting the evolution of the electrical system comprising generating a set of scenarios, having each an associated probability, by using a probability a parking spot will be equipped with a charging station with a given power at a given time.

FIG. 1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 21 16 9022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Why should parking garages be scanned? - DiConnex", <br><br>26 May 2020 (2020-05-26), XP055844945, Retrieved from the Internet: URL:https://diconnex.com/en/blog/2020/05/26/why-should-parking-garages-be-scanned/ [retrieved on 2021-09-27] <br>* pages 2, 4, 6, 7, 8 * <br>* the whole document * <br>----- | 1-9 | INV.<br>G06F30/18<br><br>ADD.<br>G06F111/10<br>G06F113/16 |
| X | US 2018/012396 A1 (SUN GUOPING [JP] ET AL) 11 January 2018 (2018-01-11) <br>* abstract * <br>* paragraphs [0005], [0021] - [0031], [0044] - [0045] * <br>* figures 1, 2, 5, 6 * <br>* the whole document * <br>----- | 1-9 | |
| X | GONG ZHENG ET AL: "Mapping and Semantic Modeling of Underground Parking Lots Using a Backpack LiDAR System", IEEE TRANSACTIONS ON INTELLIGENT TRANSPORTATION SYSTEMS, IEEE, PISCATAWAY, NJ, USA, <br>vol. 22, no. 2, <br>5 December 2019 (2019-12-05), pages 734-746, XP011834202, <br>ISSN: 1524-9050, DOI: 10.1109/TITS.2019.2955734 <br>[retrieved on 2021-02-02] <br>* abstract * <br>* figures 1, 2, 3, 6 * <br>* sections III.B-D, V * <br>* the whole document * <br>----- <br><br>-/-- | 1-9 | |

TECHNICAL FIELDS
SEARCHED (IPC)

G06F

The present search report has been drawn up for all claims

| Place of search | Date of completion of the search | Examiner |
|---|---|---|
| Munich | 27 September 2021 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches Patentamt
European Patent Office
Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anymous: "SITING AND DESIGN GUIDELINES FOR ELECTRIC VEHICLE SUPPLY EQUIPMENT", , 1 November 2012 (2012-11-01), XP055844968, Retrieved from the Internet: URL:https://www.transportationandclimate.org/sites/default/files/EV_Siting_and_Design_Guidelines.pdf [retrieved on 2021-09-27] * abstract * * page 4 * * the whole document * ----- | 1-9 | |

TECHNICAL FIELDS SEARCHED (IPC)

The present search report has been drawn up for all claims

| Place of search | Date of completion of the search | Examiner |
|---|---|---|
| Munich | 27 September 2021 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**                  EP 21 16 9022

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2021

| Patent document cited in search report | Publication date | Patent family member(s) | Publication date |
|---|---|---|---|
| US 2018012396 A1 | 11-01-2018 | CN 107590300 A<br>EP 3267342 A1<br>JP 6753180 B2<br>JP 2018005861 A<br>KR 20180006304 A<br>US 2018012396 A1 | 16-01-2018<br>10-01-2018<br>09-09-2020<br>11-01-2018<br>17-01-2018<br>11-01-2018 |

EPO FORM P0459

For more details about this annex : see Official Journal of the European Patent Office, No. 12/82